# EUROPÄISCHE PATENTSCHRIFT

(11) **EP 3 921 195 B1**
(45) Veröffentlichungstag und Bekanntmachung des Hinweises auf die Patenterteilung: **17.06.2026**
(21) Anmeldenummer: 20702982.8
(22) Anmeldetag: 28.01.2020
(51) Int. Cl.: B60H 1/34, F24F 13/14

(54) **LUFTAUSSTRÖMER MIT EINER BEDIENEINRICHTUNG FÜR EIN VERSCHWENKBAR GELAGERTES LUFTLEITELEMENT**
AIR VENT WITH A CONTROL DEVICE FOR A PIVOTALLY MOUNTED AIR GUIDING ELEMENT
DIFFUSEUR D'AIR COMPRENANT UN DISPOSITIF DE COMMANDE POUR UN ELÉMENT DÉFLECTEUR D'AIR QUI EST MONTÉ PIVOTANT

(30) Priorität: 04.02.2019 DE 102019102652; 13.08.2019 DE 102019121738
(43) Veröffentlichungstag der Anmeldung: 15.12.2021
(73) Patentinhaber: Motherson DRSC Deutschland GmbH, 96317 Kronach (DE)
(72) Erfinder: SCHINZLER, Claus, 96317 Kronach Bayern (DE); MANTEY, Andy, 96352 Gifting (DE)
(74) Vertreter: Isarpatent
(86) Internationale Anmeldenummer: PCT/EP2020/052015
(87) Internationale Veröffentlichungsnummer: WO 2020/160960

(56) Entgegenhaltungen:
- DE-A1- 102011 115 178
- DE-A1- 102014 102 332
- JP-A- 2000 168 351
- JP-U- S57 188 038
- US-A1- 2018 170 149

## Beschreibung

### Hintergrund

Luftausströmer dienen zur Ablenkung von ausgegebener Luft, die von einer Klimaanlage oder einer anderen Belüftungseinrichtung zur Verfügung gestellt wird. Luftausströmer werden bei Fahrzeugen eingesetzt, um Frischluft, temperierte Luft und/oder klimatisierte Luft in den Fahrgastraum eines Fahrzeugs zu bringen. Fahrzeuge können bspw. Kraftfahrzeuge, wie PKW, LKW oder Busse, Züge, Flugzeuge oder Schiffe sein.

Bei Luftausströmern kann in der Regel neben der Steuerung der Ablenkung von ausgegebener Luft, bspw. von einer Klimaanlage, auch die Menge an ausgegebener Luft geregelt werden. Die Menge der zugeführten Luft kann über eine Schließ- oder Drosselklappe geregelt werden. Die Schließ- oder Drosselklappe ist in der Regel verschwenkbar in einem Luftkanal gelagert. In Abhängigkeit der Stellung der Schließ- oder Drosselklappe wird Luft zugeführt oder die Luftzufuhr unterbunden.

Luftausströmer können in einem Fahrzeugarmaturenbrett oder im Bereich der A-, B- oder C- Säule oder am Dach eines Kraftfahrzeuges angeordnet sein.

Luftausströmer in Kraftfahrzeugen weisen Luftleitelemente auf, die verschwenkbar oder starr gelagerte Lamellen oder Luftleitkörper, wie z.B. drehbar gelagerte Walzen oder verschwenkbare Flügel und feststehende Anordnungen mit Flügeln etc., umfassen, welche eine Ablenkung der ausgegebenen Luft ermöglichen. Schließ- oder Drosselklappen sind ebenfalls als Luftleitelemente anzusehen und bewirken häufig zusätzlich eine Luftablenkung.

### Stand der Technik

Die Ansteuerung von verschwenkbar gelagerten Luftleitelementen erfolgt regulär über Bedienelemente. Bedienelemente umfassen z.B. Bedienräder oder Schieber. Diese stehen direkt oder über Verbindungselemente mit den Luftleitelementen in Verbindung und bewirken bei einer Verlagerung des Bedienelements ein entsprechendes Verschwenken der Luftleitelemente.

Es sind zudem Luftausströmer mit elektrischen Antriebseinrichtungen bekannt, die ein motorisches Verschwenken von Luftleitelementen ermöglichen.

Es ist bei den bekannten Luftausströmern jedoch nicht möglich Luftleitelemente sowohl motorisch als auch manuell zu verschwenken, ohne dass die Komponenten sich gegenseitig behindern oder beim Verschwenken beschädigt werden.

Aus US 2018/170149 A1 ist ein hybrides Betätigungselementsystem für eine Fahrzeug-Düsenausströmerdrosselklappe bekannt, die einen manuellen Betätigungselementmechanismus, der mit einer Düsenausströmerdrosselklappe wirkverbunden ist, und einen angetriebenen Betätigungselementmechanismus aufweist, der mit einem Abschnitt des manuellen Betätigungselementmechanismus wirkverbunden ist. Der angetriebene Betätigungselementmechanismus beinhaltet ein Stellelement, das mit einem angetriebenen Betätigungselement und dem Abschnitt des manuellen Betätigungselementmechanismus wirkverbunden ist. Eine Steuerung ist mit dem angetriebenen Betätigungselement wirkverbunden.

JP 2000-168351 A offenbart eine Bedieneinrichtung für die Lamellen eines Luftausströmers, wobei sowohl über einen Motor als auch manuell ein Verstellen der Lamellen erfolgen kann, wozu eine großbauende Zahnradanordnung mit einem federgelagerten Führungsschlitten vorgesehen ist.

DE 10 2014 102 332 A1 offenbart eine Lamelle zum Einsatz in einem Luftausströmer, wobei die Lamelle in einem Gehäuse angeordnet ist, wobei die Lamelle im Gehäuse derartig lagerbar ist, dass die Lamelle um ihre Längsachse schwenkbar ist, wobei an der Lamelle mindestens ein Sensorelement angeordnet ist, das die Stellung der Lamelle erfasst und wobei die Lamelle mit einem Stellantrieb verbindbar ist, der über eine Rutschkupplung mit der Lamelle mechanisch verbindbar ist.

JP S57-188038 U offenbart eine Bedieneinrichtung für eine Luftdüse mit einem Hebel, der in Eingriff mit einer Walze bringbar ist, die eine Führungsnut aufweist, wobei die Walze über einen Elektromotor in Rotation versetzt werden kann. Ein Ende des Hebels greift in die Führungsnut und ein weiteres Ende ist über eine Feder mit einem Lagerelement verbunden. Über die Walze wird das Lagerelement nach Maßgabe der Position des Hebels unter Zuhilfenahme der Feder verlagert, wobei das Lagerelement wiederrum mit einer Koppelstange zum synchronen Verschwenken von Lamellen verbunden ist.

### Aufgabe

Derzeit werden häufig noch manuelle Bedienelemente eingesetzt, insbesondere bei Kraftfahrzeugen. In Zukunft wird die Ansteuerung rein elektrisch erfolgen. Es ist für den Übergangszeitraum daher hilfreich und erforderlich eine Lösung bereitzustellen, die für diesen Wandel eine Lösung bietet und dadurch entstehenden Problemen entgegentritt. Vor allem in der Übergangszeit werden Fahrgäste auch bei elektrisch angesteuerten Luftausströmern dazu neigen, manuell die Richtung und Menge der ausgegebenen Luft zu verändern. Um dies zu ermöglichen und Fahrgästen die Veränderung im Hinblick auf die Bedienung zu erleichtern ist es erforderlich, hierfür eine Lösung anzugeben. Des Weiteren soll für einen Fahrgast die veränderte Stellung von Luftleitelementen auch dann erkennbar sein, wenn das Verstellen automatisch, z.B. über einen Elektromotor, erfolgt.

Es besteht daher die Aufgabe darin eine Lösung anzugeben, die sowohl ein manuelles Verschwenken von Luftleitelementen als auch ein Verschwenken über einen Aktuator ermöglicht, wobei es zu keiner Behinderung, Blockade oder Beschädigung der daran beteiligten Komponenten kommt. Zudem soll die Lösung einfach und kostengünstig ausgebildet sein, so dass sich ein Einsatz auch bei Kleinwägen lohnt, sowie eine Alternative zu den aus dem Stand der Technik bekannten Anordnungen bereitstellen.

### Lösung

Die vorstehend genannte Aufgabe wird erfindungsgemäß durch einen Luftausströmer gemäß dem unabhängigen Anspruch 1 gelöst. Vorteilhafte Ausgestaltungen der Erfindung ergeben sich aus den Unteransprüchen.

Bei der vorgeschlagenen Lösung erfolgt durch die dauerhafte Kopplung zwischen Bedienelement und Stellelement stets eine Verlagerung des Bedienelements, unabhängig davon ob das Verstellen manuell über das Bedienelement oder ferngesteuert über den Aktuator erfolgt. Daher hat ein Fahrgast oder eine Bedienperson durch die veränderte Position oder Stellung des Bedienelements sofort eine Rückmeldung über die Stellung des Luftleitelements. Durch eine Verlagerung des Bedienelements mittels Verschieben oder Verdrehen erfolgt eine mechanische Kraftübertragung auf das Stellelement.

Eine Verlagerung des Bedienelements kann bspw. bei einem Bedienrad durch ein Verdrehen des Bedienrads erfolgen. Bei einem auf einem Luftleitelement wie z.B. einer Lamelle verschiebbar gelagerten Bedienelement kann die Verlagerung des Bedienelements sowohl durch das Verschwenken der Lamelle selbst als auch durch ein Verschieben entlang der Lamelle erfolgen.

Die Verlagerung des Bedienelements ermöglicht das Verschwenken des Luftleitelements. Der Aktuator muss mit dem Stellelement in Eingriff gebracht werden, damit das Verschwenken des Luftleitelements über den Aktuator erfolgen kann. Wenn das Stellelement über den Aktuator verlagert wird, um das Luftleitelement zu verschwenken, wird automatisch auch das Bedienelement mit verlagert, so dass die Veränderung bzw. die Stellung des Luftleitelements angezeigt werden. Das in-Eingriff-bringen des Aktuators mit dem Stellelement kann auf verschiedene Arten und mithilfe verschiedener Kopplungen erfolgen. Wesentlich ist, dass in der entkoppelten Stellung der Aktuator oder damit verbundene Teile nicht in den Stellweg des Stellelements ragen, damit es zu keiner Blockade beim manuellen Verstellen des Luftleitelements über das Bedienelement kommt. Hierzu werden der Aktuator oder ein damit verbundenes Teil (z.B. ein Antriebs- oder Rückstellelement) wieder in ihre Ausgangsstellung verbracht, in welcher der Aktuator oder das damit verbundene Teil nicht in den Stellweg des Stellelements ragen. Der Aktuator oder ein damit verbundenes Teil stehen daher nur dann mit dem Stellelement in Eingriff, wenn ein Verschwenken des Luftleitelements über den Aktuator durchgeführt wird. Zur Ansteuerung kann eine Steuerung vorhanden sein, die von einer weiteren Einheit Befehle zum Verschwenken des Luftleitelements erhält. Die Befehle können von einer weiteren Steuereinheit, der Steuereinheit selbst und/oder von Bedienelementen (z.B. Taster, Drehregler, Touchbedienfelder, Touchscreens, etc.) kommen.

Die Bedieneinrichtung ermöglicht daher ein manuelles Verschwenken des Luftleitelements, ohne dass dies zu einer Einwirkung auf den Aktuator führt, und ein Verschwenken über den Aktuator, wobei das Bedienelement sowohl beim manuellen Verschwenken als auch beim ferngesteuerten Verschwenken über den Aktuator verlagert wird und die Auslenkung des Luftleitelements anzeigt.

Das Stellelement kann direkt mit dem Luftleitelement verbunden und um eine gemeinsame Schwenkachse drehbar gelagert sein. Das Stellelement kann aber auch über eine Getriebeanordnung oder über Hebel mit dem Luftleitelement gekoppelt sein, wobei die Schwenkachsen des Luftleitelements und des Stellelements parallel zueinander verlaufen. Wesentlich ist die drehbare Lagerung des Stellelements, wobei das Stellelement vorzugsweise um eine zentrisch durch das Stellelement verlaufende Achse drehbar gelagert ist.

Das Stellelement ist als Lagerbuchse ausgebildet. Bei der Ausführung als Lagerbuchse sind das Luftleitelement und die Lagerbuchse um eine konzentrisch verlaufende Achse drehbar gelagert und insbesondere miteinander verbunden oder einteilig ausgebildet, so dass eine Rotation des Luftleitelements eine entsprechende Rotation der Lagerbuchse und umgekehrt bewirkt.

Die Lagerbuchse weist einen ausgeschnitten bzw. freien Bereich auf, in dem das Anlageelement aufgenommen ist. Das Anlageelement kann bspw. direkt oder indirekt mit dem Aktuator verbunden sein. Die Drehachse des Anlageelements kann konzentrisch zur Drehachse der Lagerbuchse verlaufen. Der freie Bereich ist so gewählt, dass das Anlageelement um ein definierbares Winkelmaß verdreht werden kann, bis es in Anlage mit den beiden den freien Bereich begrenzenden Seitenwänden der Lagerbuchse kommt. In einer Neutralstellung kann das Anlageelement bspw. in beide Richtungen um ein gleiches Maß verdreht werden, bis es in Anlage mit den beiden Seitenwänden kommt. In dieser Ausführung kann das Luftleitelement manuell über ein Bedienelement verschwenkt werden, ohne dass es auf den Aktuator einwirkt. In den Endstellungen des Luftleitelements kann das Anlageelement des Aktuators an den Seitenwänden der Lagerbuchse anliegen. Zum motorischen Verstellen über den Aktuator wird der Aktuator verdreht, wobei das Anlageelement in entsprechender Weise verdreht wird und in Anlage mit einer der beiden Seitenwände der Lagerbuchse kommt. Wenn dann der Aktuator weiter verdreht wird, drückt das Anlageelement gegen die Seitenwand der Lagerbuchse und bewirkt ein Verdrehen der Lagerbuchse und damit die Rotation bzw. das Verschwenken des Luftleitelementes. In weiteren Ausführungsformen kann das manuelle Verschwenken des Luftleitelementes über ein direkt an dem Luftleitelement angeordnetes Bedienelement, beispielsweise in Form eines Schiebeknopfs, oder beispielsweise über ein abseits des Luftleitelements angeordnetes Bedienrad erfolgen, das einen Abschnitt mit Übertragungselementen aufweist, wobei die Lagerbuchse umfangsseitig korrespondierende Übertragungselemente aufweist. Ausführungen mit einer Lagerbuchse weisen den Vorteil auf, dass der benötigte Bauraum für die Kinematik sehr gering ist. Eine solche Ausführung kann daher als platzsparend bezeichnet werden. Das Anlageelement kann bspw. als Zapfen, Pin oder "Nase" ausgebildet sein und von einem Lagerabschnitt, der in einer Aufnahme in der Lagerbuchse aufgenommen ist, abstehen. Der Lagerabschnitt kann als Antriebselement mit dem Aktuator verbunden sein. Bspw. kann der Lagerabschnitt einen Teil einer Abtriebsachse des Aktuators darstellen oder über einen Verbindungsabschnitt mit dem Aktuator verbunden sein.

In noch weiteren Ausführungsformen kann die Lamelle ein Anlageelement aufweisen, das beispielsweise an einem Lagerzapfen angeordnet ist und von diesem absteht, wobei der Aktuator mit einer Lagerbuchse verbunden ist, die entsprechend einen freien Bereich aufweist, welcher die Lagerbuchse umgibt und in Abhängigkeit der Rotation des Anlageelements in Anlage mit einen freien Bereich begrenzenden Seitenwänden kommt. Der erforderliche Verstellweg der Lagerbuchse beim motorischen Verschwenken des Luftleitelements kann analog wie weiter noch beschrieben über eine Kalibrierung und dann ein Anfahren von oben und unten zum Erreichen der Zielposition oder mithilfe von Erfassungsmitteln erfolgen.

Die Lagerbuchse und das Bedienelement können korrespondierende Übertragungselemente aufweisen. Solche Übertragungselemente stellen sicher, dass es zu einer Verlagerung (Rotation) der Lagerbuchse bei einer Verlagerung des Bedienelements (Verdrehen oder Verschieben) kommt. Übertragungselemente können bspw. als Reibelemente ausgebildet sein oder Hakenanordnungen aufweisen.

In den vorstehend beschriebenen Varianten mit einer Lagerbuchse kann die Lagerbuchse sowohl die Funktion des Stellelements als auch die Funktion eines Antriebselements übernehmen, das als Rückstellelement dient, wobei das Rückstellelement nicht zwingend direkt mit dem Aktuator verbunden sein muss oder als Teil des Aktuators zu verstehen ist.

Das Luftleitelement, die Lagerbuchse und/oder der Zapfen des Lagerabschnitts können mit einer Positionserfassungseinheit gekoppelt sein. Zur Erfassung des Drehwinkels, der Auslenkung und/oder Lage der Komponenten können bspw. Potentiometer, Hallsensoren oder andere Einrichtungen verwendet werden, die eine Rückmeldung über die Position und Auslenkung liefern. Diese Informationen werden dann von einer Steuerung zur Ansteuerung des Aktuators verwendet, damit die Steuerung bspw. die Ist-Stellung eines Anlageelements, Hebels, einer Kulisse oder Ausschnitts nicht erst ermitteln muss (z.B. durch ein Anfahren), sondern bereits bekannt sind, so dass ein gezieltes und schnelleres Verlagern des Stellelements zum Verschwenken des Luftleitelements erfolgen kann. Bei einer direkten Erfassung der Position bzw. Auslenkung des Luftleitelements, bspw. über ein Potentiometer an der Drehachse des Luftleitelements, kann diese Information auch an eine Anzeige weitergegeben werden, die bspw. über ein Display, einen Bildschirm oder eine andere optische Anzeige (z.B. mittels Leuchtmitteln - LEDs etc.) die Auslenkung des Luftleitelements zeigt.

Der Aktuator kann einen Elektromotor, einen Schrittmotor, einen Linearantrieb oder einen magnetischen Antrieb aufweisen. Ein Schrittmotor weist den Vorteil auf, dass die Schritte einem festen Drehwinkel entsprechen und damit ein Erfassen der Auslenkung des Luftleitelements schnell durchführbar ist. Bei Elektromotoren kann in einfachen Ausführungen eine Kalibrierung vorgenommen werden, wobei eine maximale untere Stellung des Luftleitelements und eine maximale obere Stellung des Luftleitelements angefahren und gespeichert werden. Danach sind die obere und untere sowie die Zwischenstellungen für den Elektromotor hinterlegt. Soll nach einem manuellen Verschwenken des Luftleitelements ein Verschwenken über den Aktuator durchgeführt werden, fährt der Elektromotor die gewünschte Zielposition einmal von unten und einmal von oben an, da die tatsächliche Auslenkung des Luftleitelements nicht bekannt ist. Ein solches Verstellen ist zwar zeitaufwendiger aber von der Umsetzung relativ einfach und daher kostengünstig. Es kann bei dieser Ausführung auf die Erfassung der Ist-Position des Luftleitelements verzichtet werden. Hierbei entfallen dann auch die Kosten für solche Erfassungsmittel.

Anstelle eines Rotationsantriebs kann auch ein Linearantrieb verwendet werden, der direkt auf einen Hebel oder über einen Hebel oder ähnliches auf einen Pin wirkt, oder der indirekt über eine Scheibe eine Rotation hervorruft, wobei die Scheibe bspw. dann als Antriebselement dient.

Das Luftleitelement kann eine Lamelle, ein Luftleitkörper oder eine Schließ- oder Drosselklappe sein. Luftleitkörper können walzenförmig, flügelförmig oder eiförmig ausgebildet sein. Luftleitkörper können bspw. einen tropfenförmigen oder keilförmigen Querschnitt aufweisen.

Um eine Blockade zu verhindern, wenn während einer motorischen Verstellung des Stellelements am Bedienelement eine Bewegung ausgeführt wird, kann der Motor durch das höhere Moment den Verstellvorgang abbrechen und zurück in die Ausgangsstellung fahren.

Weitere Vorteile, Merkmale und Ausgestaltungsmöglichkeiten ergeben sich aus den Figuren von nicht einschränkend zu verstehenden Ausführungsbeispielen.

### Kurzbeschreibung der Zeichnungen

In den Zeichnungen zeigt:
- Fig. 1: verschiedene Stellungen einer Bedieneinrichtung für einen gattungsgemäßen Luftausströmer einer ersten Ausführungsform;
- Fig. 2: eine perspektivische Darstellung eines erfindungsgemäßen Luftausströmers einer zweiten Ausführungsform;
- Fig. 3: eine perspektivische Darstellung einer Bedieneinrichtung des Luftausströmers der zweiten Ausführungsform von Fig. 2;
- Fig. 4: eine schematische Draufsicht auf Komponenten der Bedieneinrichtung von Fig. 3 des Luftausströmers von Fig. 2;
- Fig. 5: eine weitere schematische Draufsicht auf Komponenten der Bedieneinrichtung von Fig. 3 des Luftausströmers von Fig. 2; und
- Fig. 6: schematische Darstellungen der Bedieneinrichtung von Fig. 3 in verschiedenen Stellungen.

In den Zeichnungen mit gleichen Bezugszeichen versehene Elemente entsprechen im Wesentlichen einander, sofern nichts anderes angegeben ist. Darüber hinaus wird darauf verzichtet, Bestandteile zu zeigen und zu beschreiben, welche nicht wesentlich zum Verständnis der hierin offenbarten technischen Lehre sind. Im Weiteren werden nicht für alle bereits eingeführten und dargestellten Elemente die Bezugszeichen wiederholt, sofern die Elemente selbst und deren Funktion bereits beschrieben wurden oder für einen Fachmann bekannt sind.

### Ausführliche Beschreibung von Ausführungsbeispielen

In den Zeichnungen zeigen die Figuren verschiedene Konzepte und Wirkprinzipen einer Bedieneinrichtung für ein verschwenkbar gelagertes Luftleitelement, wobei das Luftleitelement sowohl über einen Aktuator als auch manuell über ein Bedienelement verstellbar ist. erste Ausführungsform

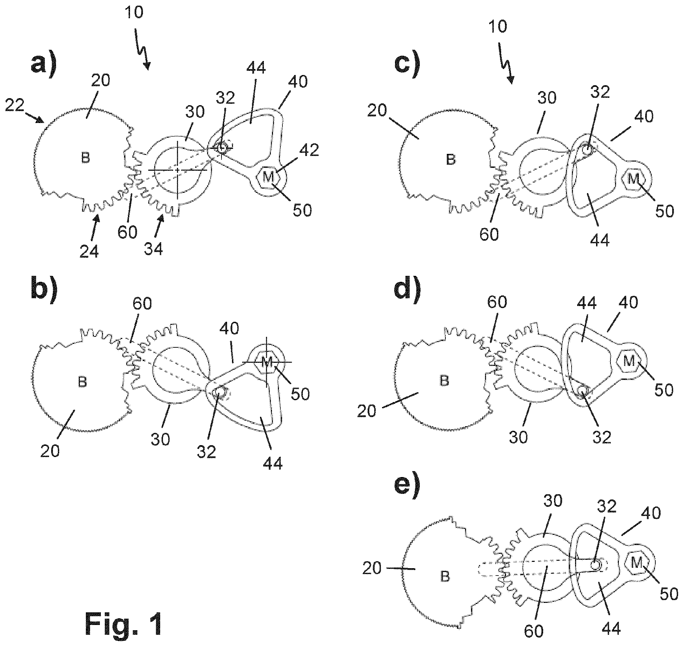

Die in Fig. 1 gezeigte Ausführungsform stellt eine Bedieneinrichtung dar, welche lediglich zum Verständnis der beanspruchten zweiten Ausführungsform dient.

Fig. 1 zeigt verschiedene Stellungen einer Bedieneinrichtung 10 für einen gattungsgemäßen Luftausströmer einer ersten Ausführungsform. Der Luftausströmer weist ein nicht dargestelltes Gehäuse auf, in dem mindestens eine Lamelle 60 als Luftleitelement verschwenkbar gelagert ist. Die Lamelle 60 kann mit weiteren parallel ausgerichteten Lamellen über mindestens eine Koppelstange zum synchronen Verschwenken gekoppelt sein.

In dem Luftausströmer können auch weitere orthogonal zu der Lamelle 60 ausgerichtete Lamellen verschwenkbar gelagert sein. Der Luftausströmer kann beispielsweise in einem Kraftfahrzeug in einem Fahrzeugarmaturenbrett angeordnet sein und über eine vordere Luftauslassöffnung eine Belüftung des Fahrzeuginnenraums bereitstellen. Über die Lamelle 60 und weitere Lamellen kann die Richtung der ausströmenden Luft verändert werden. Hierzu weist der Luftausströmer ein Bedienelement 20 auf, welches in dem ersten Ausführungsbeispiel als Bedienrad ausgebildet ist.

Das Bedienelement 20 bzw. das Bedienrad ist derart in dem Gehäuse des Luftausströmers angeordnet, dass ein Bedienabschnitt 22 des Bedienelements 20 über einen Schlitz in einer Blende, welche die vordere Luftauslassöffnung des Gehäuses umgibt, zugänglich ist. Über den Bedienabschnitt 22 kann das Bedienelement 20 gedreht werden. Das Bedienelement 20 ist hierzu im Wesentlichen mittig drehbar am Gehäuse gelagert.

Der Bedienabschnitt 22 kann eine spezielle Oberflächengestaltung im Hinblick auf dessen Haptik und Farbgebung aufweisen. Zudem kann der Bedienabschnitt 22 beleuchtbar sein, um auch bei schlechten Sichtverhältnissen die Position des Bedienelements 20 anzuzeigen.

Das Bedienelement 20 weist gegenüberliegend zum Bedienabschnitt 22 einen Zahnradabschnitt 24 mit einer Vielzahl an Zähnen auf. Diese Zähne stehen in Eingriff mit den Zähnen eines Zahnradabschnitts 34 eines Stellelementes 30. Das Stellelement 30 ist drehbar am Gehäuse des Luftausströmers gelagert und mit der Lamelle 60 derart verbunden bzw. gekoppelt, dass eine Rotation des Stellelementes 30 eine entsprechende Rotation der Lamelle 60 und umgekehrt bewirkt. In dem ersten Ausführungsbeispiel weisen das Stellelement 30 und die Lamelle 60 eine gemeinsame Schwenkachse auf.

Das Stellelement 30 weist einen rückwärtigen Abschnitt auf, an dem ein Zapfen 32 als Anlageelement angeordnet ist. Der Zapfen 32 ist in einer Aussparung 44 eines Antriebselements 40 aufgenommen. Das Antriebselement 40 weist eine Lageröffnung 42 auf, in welcher eine Welle 50 eines Motors aufgenommen ist. Die Welle 50 und die Lageröffnung 42 weisen korrespondierende Querschnitte auf, sodass eine Rotation der Welle 50 zu einer Rotation des Antriebselements 40 führt.

Der Motor kann beispielsweise ein Elektromotor in Form eines Schrittmotors sein, der in definierten Schritten verfahren werden kann. Der Elektromotor dient in dieser Ausführungsform als Aktuator zum motorischen Verschwenken der Lamelle 60.

Die Fig. 1a) bis e) zeigen verschiedene Stellungen des Bedienelements 20, des Stellelements 30 und des Antriebselements 40.

Die Bedieneinrichtung 10 dient dazu, sowohl ein manuelles Verschwenken der Lamelle 60 als auch ein motorisches Verschwenken der Lamelle 60 bereitzustellen, ohne dass es zu einer Blockade durch den Elektromotor kommt oder der Elektromotor sowie die Komponenten der Bedieneinrichtung 10 beschädigt werden.

Die Fig. 1a) und b) zeigen schematisch die Ausrichtung der Komponenten der Bedieneinrichtung 10 bei einem motorischen Verschwenken.

Eine Neutralstellung der Lamelle 60 und der Komponenten der Bedieneinrichtung 10 ist in Fig. 1e) dargestellt. In der Neutralstellung weist in dem Ausführungsbeispiel die Lamelle 60 eine waagerechte Ausrichtung auf. Dementsprechend ist der Zahnradabschnitt 34 des Stellelements 30 der vorderen Luftauslassöffnung zugewandt und der rückwärtige Abschnitt mit dem Zapfen 32 ragt in die entgegengesetzte Richtung. Des Bedienelement 20 ist über die Kopplung mittels der Zahnradabschnitte 24 und 34 entsprechend ausgerichtet. Das Antriebselement 40 befindet sich ebenfalls in einer Neutralstellung, wobei der Zapfen 32 im Wesentlichen mittig in der Aussparung 44 aufgenommen ist. Hierzu sei angemerkt, dass der Elektromotor das Antriebselement 40 jedes Mal nach einer Betätigung des Antriebselements 40 zum Verschwenken der Lamelle 60 zurück in die Ausgangsstellung verfährt, wie sie in Fig. 1e) für das Antriebselement gezeigt ist. Lediglich bei einer manuellen Verstellung der Lamelle 60 kann das Antriebselement 40 die verschwenkte Position beibehalten, wie in den Fig. 1c) und c) gezeigt.

Die Figuren 1c), d) und e) zeigen schematisch die Ausrichtung der Komponenten der Bedieneinrichtung 10 bei einem manuellen Verschwenken.

Zunächst wird ausgehend von der Neutralstellung (Fig. 1e)) das motorische Verschwenken erläutert.

Fig. 1a) zeigt den Zustand, in welchem die Lamelle 60 nach unten verschwenkt ist. Hierzu hat der Elektromotor M die Welle 50 rotiert, was zu einer Rotation des Antriebselements 40 geführt hat. Bei der Rotation des Antriebselements 40 gelangt der Zapfen 32 in Anlage mit einer die Aussparung 44 begrenzenden Wand und wird bei einer weiteren Rotation des Antriebselements 40 entsprechend mitgeführt. Ein weiteres Verdrehen des Antriebselements 40 bewirkt daher ein Verschwenken des Stellelements 30 und somit auch ein Verschwenken der Lamelle 60. Da die Zahnradabschnitte 24 und 34 des Stellelements 30 und des Bedienelements 20 in Eingriff stehen, erfolgt zudem eine Rotation des Bedienelements 20. Dies hat zum Vorteil, dass eine Verlagerung der Lamelle 60 auch über das Bedienelement 20 insbesondere im Bedienabschnitt 22 sichtbar ist, selbst wenn die Rotation bzw. das Verschwenken der Lamelle 60 über den Elektromotor erfolgt ist.

Aufgrund der Kopplung der einzelnen Komponenten der Bedieneinrichtung 10 erfolgt beim motorischen Verschwenken der Lamelle 60 auch stets eine Rotation bzw. eine Verlagerung des Bedienelements 20.

Nach dem Verschwenken fährt das Antriebselement 40 über den Elektromotor in die Ausgangsstellung zurück, sodass der Zapfen 32 an dem gegenüberliegenden Abschnitt der Aussparung 44 anliegt, wie dies beispielsweise in Fig. 1c) gezeigt ist. Soll dann die Lamelle 60 über das Antriebselement 40 motorisch nach unten verschwenkt werden, so erfolgt eine Rotation des Antriebselements 40 über den Elektromotor in der entgegengesetzten Richtung nach unten, bis der in Fig. 1b) gezeigte Zustand erreicht wird. Anschließend verfährt das Antriebselement 40 über den Elektromotor wieder in eine Neutralstellung des Antriebselements 40, wie in Fig. 1d) gezeigt.

Das Verfahren des Antriebselements 40 bzw. dessen Verschwenken durch den Elektromotor in die Neutralstellung des Antriebselements 40 stellt sicher, dass nach einem Verschwenken der Lamelle 60 durch den Elektromotor die Lamelle 60 über das Bedienelement 20 manuell verschwenkt werden kann, ohne dass eine Blockade durch den Elektromotor auftritt.

Bei einem manuellen Verschwenken kann ausgehend von der in Fig. 1e) gezeigten Ausrichtung der Komponenten das Bedienelement 20 nach unten verdreht werden, sodass automatisch eine Rotation des Stellelements 30 in der entgegengesetzten Richtung erfolgt und damit die Lamelle 60 entsprechend nach oben hin verschwenkt wird (Fig. 1d), weil die Lamelle 60 stets der Ausrichtung des Stellelements 30 folgt. Der Zapfen 32 gelangt dabei in den unteren Abschnitt in der Aussparung 44 des Antriebselements 40. Die Aussparung 44 ist derart ausgebildet und erstreckt sich über einen solchen Winkelbereich der Lamelle 60 beim Verschwenken, sodass in den Extremstellungen der Lamelle 60, d.h. in den maximal möglichen verschwenkten Stellungen, der Zapfen 32 in einer Neutralstellung des Antriebselements 40 an den die Aussparung 44 begrenzenden Schenkeln der Aussparung 44 anliegt.

Eine Rotation des Bedienelements 20 in die entgegengesetzte Richtung nach oben bewirkt ein entsprechend entgegengesetztes Verschwenken des Stellelements 30, sodass die Lamelle 60 nach unten verschwenkt wird (Fig. 1c)).

Vorteilhaft bei dieser Ausführung ist es, dass ein manuelles Verschwenken über das Bedienelement 20 unabhängig von der zuvor ausgeführten Betätigung (manuell oder motorisch) erfolgen kann und es zu keiner Beschädigung oder Blockade kommt. Hierzu ist es wesentlich, dass das Antriebselement 40 nach einer motorischen Verstellung wieder die in den Fig. 1c), d) oder e) gezeigte (neutrale) Ausrichtung einnimmt.

Zwischen dem Zahnradabschnitt 24 des Bedienelements 20 und dem Zahnradabschnitt 34 des Stellelements 30 kann ein zusätzliches Zahnrad angeordnet sein, das sowohl mit dem Zahnradabschnitt 24 als auch mit dem Zahnradabschnitt 34 in Eingriff steht. Dieses Zahnrad dient dazu, das gegensinnige Verschwenken des Bedienelements 20 und des Stellelements 30 aufzuheben, sodass ein Verschwenken des Bedienelements 20 nach unten auch ein Verschwenken des Bedienelements 30 nach unten und damit der Lamelle 60 hervorruft. Gleiches gilt für ein Verschwenken nach oben. Dies ermöglicht eine intuitive Bedienung der Bedieneinrichtung 10, sodass die Rotation des Bedienelements 20 auch der Ausrichtung der Lamelle 60 entspricht. Die Steuerung der Lamelle 60 wird hierüber vereinfacht.

Für den Elektromotor ist die aktuelle Position des Zapfens 32 wesentlich, um ein Verschwenken der Lamelle 60 über das Antriebselement 40 durchführen zu können. Um dies zu erreichen können verschiedene Maßnahmen ergriffen werden oder entsprechende Positionserfassungsmittel vorgesehen sein. Positionserfassungsmittel können beispielsweise ein Potentiometer aufweisen, welches vorzugsweise im Bereich der Schwenkachse der Lamelle 60 angeordnet ist. Positionserfassungsmittel ermöglichen eine direkte Erfassung der Position bzw. Auslenkungen der Lamelle 60 beispielsweise über ein Potentiometer 180, wie es für die zweite Ausführungsform beschrieben wird, sodass ein Anfahren an den Zapfen 32 durch das Antriebselement 40 entfallen kann, sodass die motorische Verstellung der Lamelle 60 schneller durchgeführt werden kann.

Alternativ kann ein "Anfahren" erfolgen, sodass hierüber die Position des Zapfens 32 und damit die Stellung der Lamelle 60 über eine Steuerung ermittelt und für die Ansteuerung des Elektromotors zum Verschwenken des Antriebselements 40 verwendet werden können.

### zweite Ausführungsform

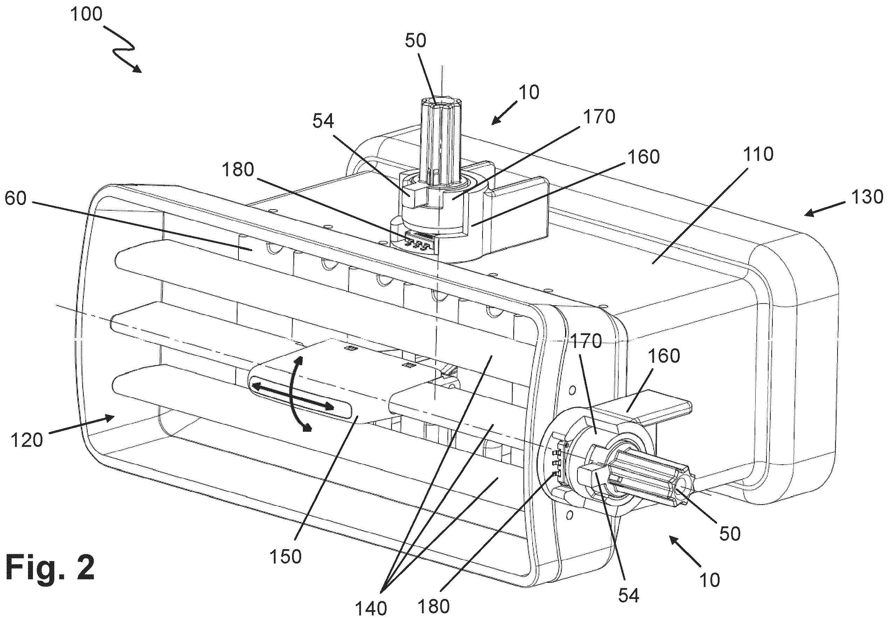

Fig. 2 zeigt eine perspektivische Darstellung eines erfindungsgemäßen

Luftausströmers 100 mit einer zweiten Ausführungsform einer Bedieneinrichtung 10. Der Luftausströmer 100 weist ein Gehäuse 110 mit einem rückwärtigen Luftzuführabschnitt 130 und einer Luftaustrittsöffnung 120 auf. Über den Luftzuführabschnitt 130 ist das Gehäuse mit einem Versorgungskanal verbunden. In den Versorgungskanal wird klimatisierte oder anderweitig behandelte Luft von einer Klimaanlage oder einer anderen Belüftungseinrichtung zugeführt. Der Luftausströmer 100 kann beispielsweise in einem Fahrzeugarmaturenbrett angeordnet sein und dient zur Belüftung des Fahrzeuginnenraums. Hierzu wird über die Luftaustrittsöffnung 120 die zugeführte Luft ausgegeben. Um die Richtung der ausgegebenen Luft zu verändern, sind eine erste Lamellenanordnung mit Lamellen 60 und eine zweite Lamellenanordnung mit Lamellen 140 vorgesehen. Die Lamellen 60 und die Lamellen 140 sind jeweils in den gegenüberliegenden Gehäusewänden des Gehäuses 110 verschwenkbar gelagert. Die Lamellen 60 der ersten Lamellenanordnung und die Lamellen 140 der zweiten Lamellenanordnung sind orthogonal zueinander verschwenkbar gelagert.

Der Luftausströmer 100 kann in weiteren Ausführungsformen zusätzlich noch eine Drosseleinrichtung aufweisen, die zur Regelung der zugeführten Luftmenge dient. Über die Drosseleinrichtung kann beispielsweise auch eine Luftzufuhr vollständig unterbunden werden.

Zum Verschwenken der Lamellen 60 und der Lamellen 140 ist ein Bedienelement 150 vorgesehen, das auf einer mittleren Steuerlamelle der Lamellen 140 im Bereich der Luftaustrittsöffnung 120 verschiebbar gelagert ist. Ein Verschieben in Richtung des Pfeils entlang der Lamelle 140 bewirkt ein Verschwenken der Lamellen 60. Hierzu ist des Bedienelement 150 über eine Gabel oder eine andere Übertragungseinrichtung mit einer der Lamellen 60 gekoppelt. Die Lamellen 60 sind miteinander über eine Koppelstange verbunden, sodass das Verschwenken einer Lamelle 60 automatisch ein synchrones Verschwenken der anderen damit gekoppelten Lamellen 60 bewirkt.

Ein Verkippen des Bedienelements 150 nach oben und unten in der dargestellten Richtung bewirkt ein Verschwenken der mittleren Lamelle 140 um die schematisch dargestellte Achse. Die Lamellen 140 sind wie die Lamellen 60 über eine Koppelstange miteinander verbunden, sodass das Verschwenken einer Lamelle 140 automatisch ein synchrones Verschwenken der anderen Lamellen 140 hervorruft.

Somit kann über das Bedienelement 150 ein Verschwenken der Lamellen 60 und Lamellen 140 erfolgen.

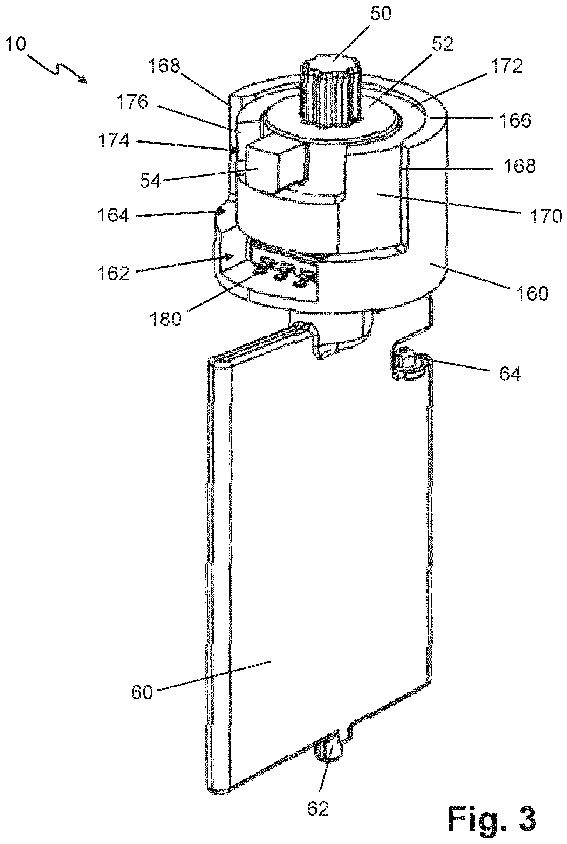

Zusätzlich kann über die Bedieneinrichtungen 10 ein motorisiertes Verschwenken der Lamellen 60 und 140 erfolgen. Hierzu weisen die Bedieneinrichtungen 10 ein Antriebselement auf. Das Antriebselement weist die Welle 50 auf. Die Welle 50 ist sternförmig ausgebildet und kann über den sternförmigen Abschnitt mit einem Elektromotor verbunden werden. Das Antriebselement weist einen Lagerabschnitt 52 auf, der in einer Lagerbuchse 170 aufgenommen ist. Von dem Lagerabschnitt 52 steht ein Zapfen 54 ab, der in einen Ausschnitt 174 greift, wie in Fig. 3 dargestellt.

Die Bedieneinrichtungen 10 sind jeweils über ein Lager 160 an Außenwänden des Gehäuses 110 angeordnet. Die Lager 160 weisen eine im Wesentlichen zylinderförmige Aufnahme auf, in welcher die Lagerbuchse 170 mit einem korrespondierenden Abschnitt drehbar gelagert ist. Die Rotationssachse der Welle 50 und des sich daran anschließenden Lagerabschnitts 52 verlaufen durch die Schwenkachsen der Steuerlamelle 140 und einer Lamelle 60. Die Lamellen 140 und 60 sind jeweils mit der Lagerbuchse 170, die in diesem Ausführungsbeispiel als Stellelement dient, fest verbunden. Eine Rotation der Lagerbuchse 170 ruft daher stets auch eine Rotation der Lamelle 140 bzw. der Lamelle 60 hervor.

Damit sowohl ein manuelles Verschwenken der Lamellen 60 und 140 über das Bedienelement 150 als auch ein motorisches Verschwenken über die Elektromotoren für die Bedieneinrichtungen 10 erfolgen kann, sind die Bedieneinrichtungen 10 so ausgebildet, wie in Fig. 3 im Detail für die mit einer Lamelle 60 gekoppelte Bedieneinrichtung 10 gezeigt.

Fig. 3 zeigt eine perspektivische Darstellung der Bedieneinrichtung 10 des Luftausströmers 100 der zweiten Ausführungsform von Fig. 2, welche mit der Lamelle 60 verbunden ist bzw. die Lamelle 60 als Bestandteil umfasst. Die nachfolgende Beschreibung gilt für die Bedieneinrichtung 10 mit der Lamelle 140 in analoger Weise.

Die Lamelle 60 weist einen Lagerzapfen 62 auf, über den die Lamelle 60 an einer Seite in der Gehäusewand des Gehäuses 110 verschwenkbar gelagert ist. Zusätzlich weist die Lamelle 60 einen Koppelzapfen 64 auf. Über den Koppelzapfen 64 ist die Lamelle 60 mittels einer Koppelstange mit weiteren Lamellen 60 zum synchronen Verschwenken verbunden. Die Lamelle 60 weist zusätzlich einen Lagerzapfen 66 auf, der sich auf der dem Lagerzapfen 62 gegenüberliegenden Seite der Lamelle 60 befindet. Der Lagerzapfen 66 weist einen tangentialen Einschnitt auf. Die Lagerbuchse 170 weist an ihrer der Lamelle 60 zugewandten Seite eine Öffnung mit einem korrespondierenden Querschnitt auf, in der der Lagerzapfen 66 aufgenommen ist, sodass hierüber die Lamelle fest mit der Lagerbuchse 170 verbunden ist.

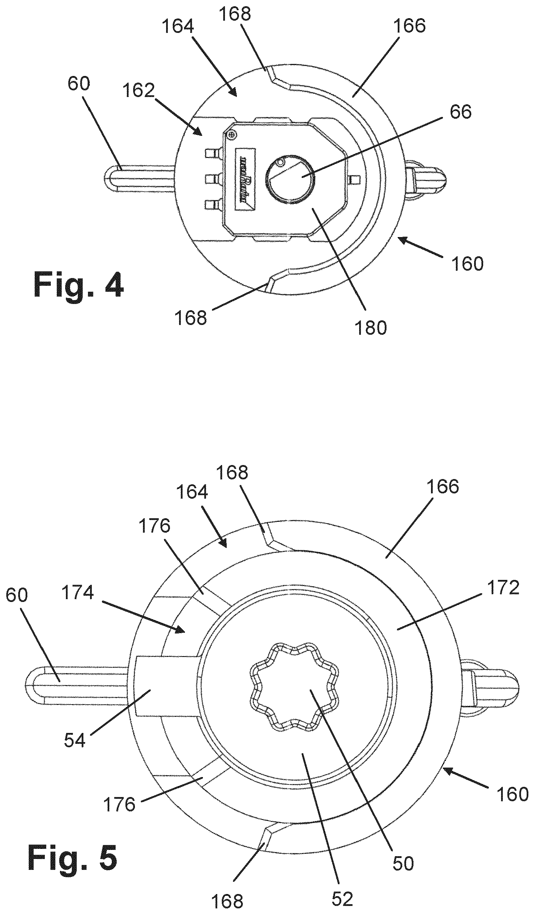

Das Lager 160 ist fest an dem Gehäuse 110 angeordnet und wird daher nicht rotiert. Die Ausrichtung der Öffnungen des Lagers 160 bleibt daher in sämtlichen Positionen der Lamellen 60 gleich. Das Lager 160 weist eine Aussparung 162 auf, in welcher ein Potentiometer 180 aufgenommen ist. Das Potentiometer 180 dient zur Erfassung des Drehwinkels der Lamelle und umgibt den Lagerzapfen 66 wie in Fig. 4 gezeigt. Die Aussparung 162 erstreckt sich soweit in das Lager 160, dass das Potentiometer 160 sicher darin aufgenommen werden kann. Über das Potentiometer 180 wird die Position der Lagerbuchse 170 erfasst und an eine Steuerung für den Elektromotor übermittelt. Es ist somit in sämtlichen Stellungen der Lamelle 60 die Ausrichtung der Lagerbuchse 170 bekannt und der Elektromotor kann entsprechend angesteuert werden.

Oberhalb der Aussparung 162 weist das Lager 160 in der Wand 166 einen Ausschnitt 164 auf. Der Ausschnitt 164 wird durch die Wandflächen 168 begrenzt.

Im Lager 160 ist die Lagerbuchse 170 aufgenommen, die in der Wand 172 einen Ausschnitt 174 aufweist. Der Ausschnitt 174 wird durch die Wandflächen 176 begrenzt. In der Lagerbuchse 170 ist schließlich das Antriebselement aufgenommen, wobei die Wand 172 im Wesentlichen den Lagerabschnitt 52 umgibt. In dem Ausschnitt 174 ist der Zapfen 54 aufgenommen.

Fig. 4 zeigt eine schematische Draufsicht auf Komponenten der Bedieneinrichtung 10 von Fig. 3. Fig. 4 zeigt die Draufsicht auf das Lager 160 und die Lamelle 60 sowie das in der Aussparung 162 aufgenommene Potentiometer 180. Die Darstellung zeigt die Ausbildung und Anordnung der Wand 166 und der den Ausschnitt 164 begrenzenden Wandflächen 168.

Fig. 5 zeigt eine weitere schematische Draufsicht auf Komponenten der Bedieneinrichtung 10 von Fig. 3, wobei zusätzlich zum Lager 160 und der Lamelle 60 die Lagerbuchse 170 und das Antriebselement dargestellt sind.

Der Zapfen 54 ragt aus dem Ausschnitt 174 hervor und kommt daher in Abhängigkeit der Rotation der Lamelle 60 oder der Welle 50 in Anlage mit den Wandflächen 176 der Wand 172 der Lagerbuchse 170 und/oder in Anlage mit den Wandflächen 168 der Wand 166 des Lagers 160. Daher kann die Lamelle 60 manuell verschwenkt werden, ohne dass dies Auswirkungen auf die Ausrichtung und den Drehwinkel des Zapfens 54 hat, wenn zugleich mit der Lamelle 60 die damit fest verbundene Lagerbuchse 170 rotiert wird. Zugleich wird die Lamelle 60 motorisch verschwenkt, wenn der Zapfen 54 gegen die Wandfläche 176 drückt, wodurch eine Rotation hervorgerufen wird. Die Wandflächen 168 begrenzen den maximalen Drehwinkel und können als Anschlag dienen.

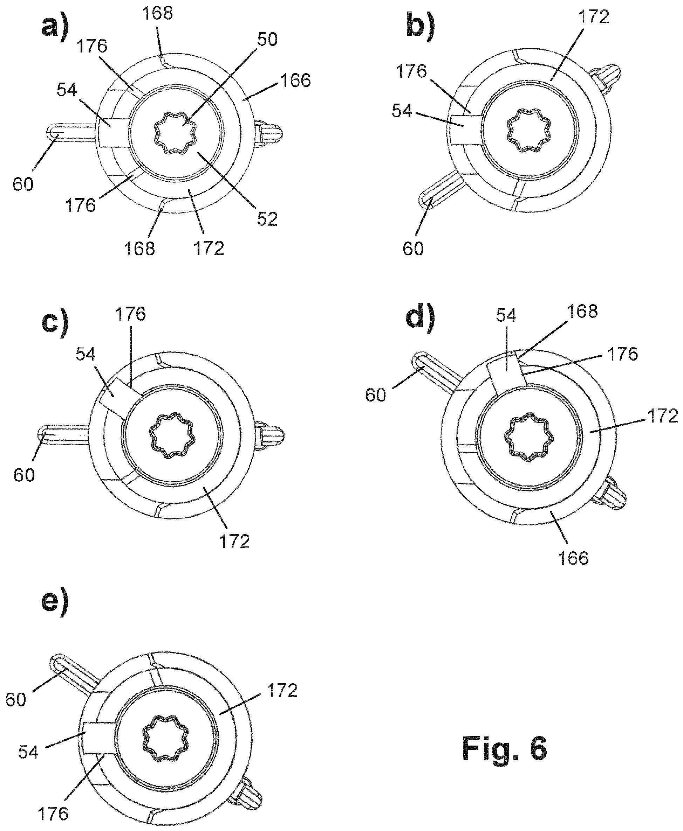

Die Fig. 6a) bis e) zeigen schematische Darstellungen der Bedieneinrichtung 10 von Fig. 3 in verschiedenen Stellungen. In Fig. 6a) ist eine Neutralstellung der Lamelle 60 und der Komponenten der Bedieneinrichtung 10 gezeigt. Die Lagerbuchse 170 und das Antriebselement sowie die Lamelle 60 weisen die in Fig. 5 gezeigte Ausrichtung auf.

Fig. 6b) zeigt den Zustand einer manuell verschwenkten Lamelle 60. Das Verschwenken erfolgt über das Bedienelement 150, ohne dass über den Elektromotor und das Antriebselement ein Verstellen bzw. Verschwenken vorgenommen wird. Deshalb befindet sich der Zapfen 54 in der Ausgangsstellung. Durch die Kopplung der Lagerbuchse 170 mit der Lamelle 60 ist die Lagerbuchse in dem Lager 160 verdreht und die Wandfläche 176 liegt an dem Zapfen 54 an. Ein weiteres Verdrehen würde auf den Elektromotor über den Zapfen 54 einwirken. Dies ist jedoch nicht möglich, da die in Fig. 6b) gezeigte Stellung bereits eine maximale Endstellung der Lamelle 60 zeigt. Die Größe der Ausschnitte 164 und 174 ist daher entsprechend der maximalen Auslenkung der Lamellen 140 und 60 zu bestimmen.

Fig. 6c) zeigt den Zustand, in welchem die Lagerbuchse 170 und damit die Lamelle 60 durch eine Rotation des Zapfens 54 ausgehend von Fig. 6b) wieder in die Neutralstellung (Fig. 6b)) verbracht worden sind. Hierzu drückt der Zapfen 54 gegen die Wandfläche 176 und bewirkt dabei eine Rotation der Lagerbuchse 170.

Fig. 6d) zeigt den Zustand nachdem die Lagerbuchse 170 und die Lamelle 60 ausgehend von der in Fig. 6c) gezeigten Stellung über den Elektromotor und den Zapfen 74 weiter verdreht worden sind. In dieser Endstellung liegt der Zapfen 54 sowohl an einer Wandfläche 176 der Lagerbuchse 170 als auch an einer Wandfläche 168 des Lagers 160 an, sodass ein weiteres Verdrehen nicht mehr möglich ist.

Fig. 6e) zeigt schließlich den Zustand nach dem motorischen Verschwenken der Lamelle 60, wobei der Elektromotor das Antriebselement wieder in die Ausgangsstellung verbracht hat. Die Ausrichtung der Lamelle 60 und der Lagerbuchse 170 bleiben jedoch bestehen.

Das motorische Verschwenken der Lamellen 60 ruft gleichfalls eine Verlagerung des Bedienelements 150 entlang der Lamelle 140 hervor, da das Bedienelement 150 über die rückseitige Gabel mit der Lamelle 60 gekoppelt ist. Für eine Bedienperson ist daher auch bei einem motorischen Verschwenken der Lamelle 60 über das Bedienelement 150 die veränderte Stellung der Lamellen 60 sofort ersichtlich.

Es ist wesentlich, dass der Elektromotor das Antriebselement stets wieder in die Neutralstellung nach einem motorisierten Verschwenken der Lamellen 60 und/oder 140 verbringt, sodass ein manuelles Verschwenken auftreten kann, ohne dass es zu einer Blockade durch den Elektromotor oder zu Beschädigungen der Kinematikbauteile kommt.

Bei dem Luftausströmer 100 können sowohl manuell über das Bedienelement 150 als auch motorisch über die Bedieneinrichtungen 10 die Lamellen 60 und 140 verschwenkt werden. Durch die beschriebene Ausbildung der beteiligten Komponenten und die Ansteuerung des Antriebselements sind eine Blockade und eine Beschädigung der Komponenten ausgeschlossen.

Der Luftausströmer 100 bietet damit die Möglichkeit sowohl manuell also motorisch die Lamellen 60 und 140 zu verschwenken, wobei auch bei einem motorischen Verschwenken die Ausrichtung der Lamellen 60 und 140 über das Bedienelement 150 und in analoger Weise über das Bedienelement 20 in der ersten Ausführungsform für einen Benutzer von außen sichtbar sind.

Zudem ist ein Luftausströmer 100 denkbar, der für die Betätigung der Lamellen 60 und 140 eine Bedieneinrichtung 10 der ersten Variante (siehe Fig. 1) und eine Bedieneinrichtung der zweiten Variante (siehe Fig. 2 bis 6) aufweist. Die Auswahl der Bedieneinrichtung basiert in erster Linie auf den vorhandenen Platzverhältnissen und ob eine Drehrichtungsumkehr gewünscht ist oder nicht. Weiterhin lassen sich mit den Bedieneinrichtungen auch Schließ-/Drosselklappen und als Rotary ausgeführte Lamellenanordnungen bewegen.

### Bezugszeichenliste

- 10: Bedieneinrichtung
- 20: Bedienelement
- 22: Bedienabschnitt
- 24: Zahnradabschnitt
- 30: Stellelement
- 32: Zapfen
- 34: Zahnradabschnitt
- 40: Antriebselement
- 42: Lageröffnung
- 44: Aussparung
- 50: Welle
- 52: Lagerabschnitt
- 54: Zapfen
- 60: Lamelle
- 62: Lagerzapfen
- 64: Koppelzapfen
- 66: Lagerzapfen
- 100: Luftausströmer
- 110: Gehäuse
- 120: Luftaustrittsöffnung
- 130: Luftzuführabschnitt
- 140: Lamelle
- 150: Bedienelement
- 160: Lager
- 162: Aussparung
- 164: Ausschnitt
- 166: Wand
- 168: Wandfläche
- 170: Lagerbuchse
- 172: Wand
- 174: Ausschnitt
- 176: Wandfläche
- 180: Potentiometer

## Patentansprüche

1. Luftausströmer (100) mit mindestens einer Bedieneinrichtung (10) für ein verschwenkbar gelagertes Luftleitelement, wobei das Luftleitelement sowohl über einen Aktuator als auch manuell über ein
Bedienelement (150) verstellbar ist, mindestens aufweisend:
- ein Bedienelement (150), das verdreh- oder verschiebbar gelagert ist,
- ein Stellelement, das verdreh- oder verschwenkbar gelagert und mit dem Luftleitelement und mit dem Bedienelement (150) gekoppelt ist, und
- einen Aktuator, der mit dem Stellelement koppelbar ist,
**dadurch gekennzeichnet, dass** das Stellelement scheibenförmig als Lagerbuchse (170) ausgebildet ist und in einer im Wesentlichen zylinderförmigen Aufnahme eines Lagers (160) an einer Außenwand eines Gehäuses (110) des Luftausströmers (100) drehbar gelagert ist, die Lagerbuchse (170) in einer Wand (172) einen Ausschnitt (174) als freien Bereich aufweist, der durch Wandflächen (176) begrenzt ist und in der Lagerbuchse (170) ein Antriebselement aufgenommen ist, das Antriebselement eine Welle (50), einen Lagerabschnitt (52) und einen vom Lagerabschnitt (52) abstehenden Zapfen (54) aufweist, wobei die Welle (50) sternförmig ausgebildet ist und über den sternförmigen Abschnitt mit dem Aktuator verbunden werden kann, wobei die Wand (172) der Lagerbuchse (170) im Wesentlichen den Lagerabschnitt (52) des Antriebselements umgibt und in dem Ausschnitt (174) der Zapfen (54) des Lagerabschnitts (52) aufgenommen ist, wobei der Aktuator und die Lagerbuchse (170) durch den Zapfen (54) des Lagerabschnitts (52) und die Wandflächen (176) der Lagerbuchse (170) nach Maßgabe der Position des Zapfens (54) des Lagerabschnitts (52) zum Verlagern der Lagerbuchse (170) in Eingriff bringbar sind.

2. Luftausströmer (100) nach Anspruch 1, wobei die Lagerbuchse (170) und das Bedienelement (150) korrespondierende Übertragungselemente aufweisen.

3. Luftausströmer (100) nach Anspruch 1 oder 2, wobei das Luftleitelement, die Lagerbuchse (170) und/oder das Antriebselement mit einer Positionserfassungseinheit gekoppelt sind.

4. Luftausströmer (100) nach einem der Ansprüche 1 bis 3, wobei der Aktuator einen Elektromotor, einen Schrittmotor, einen Linearantrieb oder einen magnetischen Antrieb aufweist.

5. Luftausströmer (100) nach einem der Ansprüche 1 bis 4, wobei das Luftleitelement eine Lamelle (60; 140), ein Luftleitkörper oder eine Schließ- oder Drosselklappe ist.

## Claims

1. Air vent (100) having at least one operating device (10) for a pivotably mounted air guide element, wherein the air guide element can be adjusted both via an actuator and manually via an operating element (150), at least having:
- an operating element (50), which is rotatably ou displaceably mounted,
- an actuating element, which is rotatably or pivotably mounted and coupled to the air guide element and to the operating element (150), and
- an actuator, which can be coupled to the actuating element,
**characterised in that** the actuating element is designed in the form of a disc-shaped bearing bush (170) and is rotatably mounted in a substantially cylindrical accomodation of a bearing (160) on an outer wall of a housing (110) of the air vent (100), the bearing bush (170) has a cut-out (174) in a wall (172) as a free area, which is delimited by wall surfaces (176), and a drive element is received in the bearing bush (170), the drive element has a shaft (50), a bearing section (52) and a pin (54) projecting from the bearing section (52), wherein the shaft (50) is star-shaped and can be connected to the actuator via the star-shaped section, wherein the wall (172) of the bearing bush (170) substantially surrounds the bearing section (52) of the drive element and is received in the cut-out (174) of the pin (54) of the bearing section (52), wherein the actuator and the bearing bush (170) can be brought into engagement, depending on the position of the pin (54) of the bearing section (52), via the pin (54) of the bearing section (52) and the wall surfaces (176) of the bearing bush (170) for displacing the bearing bush (170).

2. Air vent (100) according to claim 1, wherein the bearing bush (170) and the operating element (150) have corresponding transmission elements.

3. Air vent (100) according to claim 1 or 2, wherein the air guide element, the bearing bush (170) and/or the drive element are coupling to a position detection unit.

4. Air vent (100) according to one of claims 1 to 3, wherein the actuator has an electric motor, a stepper motor, a linear drive or a magnetic drive.

5. Air vent (100) according to one of claims 1 to 4, wherein the air guide element is a louvre (60; 140), an air guide body or a shut-off or throttle cap.

## Revendications

1. Diffuseur d'air (100) ayant au moins un dispositif de commande (10) pour un élément de guidage d'air monté de manière pivotable, dans lequel l'élément de guidage d'air peut être réglé aussi bien par l'intermédiaire d'un actionneur que manuellement par l'intermédiaire d'un élément de commande (150), comportant au moins :
- un élément de commande (150) qui est monté de manière rotative ou déplaçable,
- un élément d'actionnement qui est monté de manière rotative ou déplaçable et est couplé à l'élément de conduction d'air et à l'élément de commande (150), et
- un actionneur qui peut être couplé à l'élément d'actionnement,
**caractérisé en ce que** l'élément d'actionnement est réalisé sous la forme d'un coussinet de palier (170) en forme de disque et est monté de manière rotative dans un logement sensiblement cylindrique d'un palier (160) sur une paroi extérieure d'un boîtier (110) du diffuseur d'air (100), le coussinet de palier (170) dans une paroi (172) comprend une découpe (174) sous forme d'espace vide qui est délimité par des surfaces de paroi (176) et un élément d'entraînement est reçu dans le coussinet de palier (170), l'élément d'entraînement comprend un arbre (50), une partie de palier (52) et un tourillon (54) faisant saillie à partir de la partie de palier (52), dans lequel l'arbre (50) est formé en étoile et peut être relié à l'actionneur par l'intermédiaire de la partie en forme d'étoile, dans lequel la paroi (172) du coussinet de palier (170) entoure sensiblement la partie de palier (52) de l'élément d'entraînement et est reçue dans la découpe (174) du tourillon (54) de la partie de palier (52), dans lequel l'actionneur et le coussinet de palier (170) peuvent être mis en prise par le tourillon (54) de la partie de palier (52) et les surfaces de paroi (176) du coussinet de palier (170) selon la position du tourillon (54) de la partie de palier (52) pour déplacer le coussinet de palier (170).

2. Diffuseur d'air (100) selon la revendication 1, dans lequel la coussinet de palier (170) et l'élément de commande (150) comprennent des éléments de transmission correspondants.

3. Diffuseur d'air (100) selon la revendication 1 ou 2, dans lequel l'élément de conduction d'air, le coussinet de palier (170) et/ou l'élément d'entraînement sont couplés à une unité de détection de position.

4. Diffuseur d'air (100) selon l'une des revendications 1 à 3, dans lequel l'actionneur comprend un moteur électrique, un moteur pas à pas, un entraînement linéaire ou un entraînement magnétique.

5. Diffuseur d'air (100) selon l'une des revendications 1 à 4, dans lequel l'élément de conduction d'air est une lamelle (60 ; 140), un corps de guidage d'air ou un volet de fermeture ou de réglage.
